# EUROPEAN PATENT SPECIFICATION

(11) **EP 4 448 210 B1**
(45) Date of publication and mention of the grant of the patent: **05.11.2025**
(21) Application number: 22809918.0
(22) Date of filing: 16.11.2022
(51) Int. Cl.: B23K 26/24, B23K 26/322, B23K 26/40, B23K 26/26, B23K 101/18, B23K 101/34, B23K 103/04

(54) **METHOD FOR BUTT-WELDING TWO STEEL SHEETS**
VERFAHREN ZUM STUMPFSCHWEISSEN ZWEIER STAHLBLECHE
PROCÉDÉ DE SOUDAGE BOUT À BOUT DE DEUX TÔLES EN ACIER

(30) Priority: 16.12.2021 WO PCT/IB2021/061826
(43) Date of publication of application: 23.10.2024
(60) Divisional application: 25204095.1
(73) Proprietor: ArcelorMittal, 1160 Luxembourg (LU)
(72) Inventor: VIAUX, Ivan, 75018 PARIS (FR); GAIED, Sadok, 60740 Saint-Maximin (FR); CANOURGUES, Jean-François, 93150 Le Blanc-Mesnil (FR); ROUSSILLON, Sylvie, 60761 Montataire (FR)
(74) Representative: Lavoix
(86) International application number: PCT/IB2022/061032
(87) International publication number: WO 2023/042188

(56) References cited:
- DE-A1- 102018 118 826
- JP-B2- 5 237 263
- US-A1- 2020 086 425
- US-B2- 10 821 546

## Description

The present invention relates to a method for butt-welding two steel sheets, see claim 1.

Laser welded blanks are a widely used solution in the steel sheet metal forming industry, in particular in the automotive industry. It allows to combine in a same blank, several sub-blanks of different grades and thicknesses. This has many advantages: the optimal material properties and thickness are used in each area of the blank leading to optimized performance of the final part in terms of safety, weight, environmental footprint, etc. Furthermore, it allows designers to combine several parts into one. It also allows to maximize material use thereby reducing scrap, costs and environmental footprint. Overall, laser welded blanks simplify the production process, improve the performance of the parts and lead to increased passenger safety, productivity gains, cost savings and CO2 emissions reduction.

The emergence of new grades having very high strength and also very high formability presents new challenges to manufacture laser welded blanks. Indeed, higher strength higher formability grades come with more alloying elements, which lead to new properties, new phenomena and failure risks in the weld seam. It is particularly critical in the case of galvanized, i.e. zinc coated steel sheets. Indeed, the zinc coating used for corrosion protection can cause liquid metal embrittlement (LME) during the welding operation.

US2020086425A1 (describing the preamble of claim 1) suggests to fully remove the zinc coating on the edges to be welded to solve the issue of LME.

The current invention aims to address the issue of manufacturing laser welded blanks using zinc coated steels having a high strength in such a way that the resulting laser welded blanks have a reliable resistance and formability and in such a way that the weld seam will not present a structural weakness of the ensuing part.

The object of the present invention is achieved by providing a method for butt-welding of two steel sheets according to claim 1, optionally comprising the features of claims 2 to 5.

The invention will be further described, referring to the following figures:
- Figure 1 is a schematic of a butt to butt welding operation using a laser source.
- Figure 2A represents the state-of-the-art method to test welded assemblies. Figure 2B represents the newly developed method to test welded assemblies.
- Figures 3A and 3B represent cross sections of the steel sheet preparation before butt welding.
- Figure 4 represents a cross section of a welded assembly produced according to the method of the present invention.

In the following description, figures and claims, the orientations and spatial references are all made using an X, Y, Z coordinates referential, wherein Z is the elevation direction, perpendicular to the top and bottom faces of the steel sheets to be welded, X and Y define the plane of the steel sheets top and bottom faces. The referential is represented in each figure. When the figure is a 2D flat representation, the axis which is outside of the figure is represented by a dot in a circle when it is pointing towards the reader and by a cross in a circle when it is pointing away from the reader, following established conventions.

The directional terms "top", "up", "upper", "above", "bottom", "low", "lower", "below" etc. are defined according to the Z elevation direction. The directional terms "front" and "back" are defined according to the X direction and more particularly according to the welding direction W parallel to the X axis as indicated in the figures. The terms "front" or "downstream" mean further along in the W direction, the terms "back" or "upstream" mean further along in the opposite of the W direction.

The "width" or "transverse" direction refers to the orientation parallel to the Y axis.

A steel sheet refers to a flat sheet of steel. It has a top and bottom face, which are also referred to as a top and bottom side or as a top and bottom surface. The distance between said faces is designated as the thickness of the sheet. The thickness can be measured for example using a micrometer, the spindle and anvil of which are placed on the top and bottom faces. In a similar way, the thickness can also be measured on a formed part. The thickness of the steel sheets in the current invention is for example from 0.5 to 5.0mm, preferably from 0.5 to 4.0mm, even more preferably from 0.5 to 3.5mm.

Tailor welded blanks are made by assembling together, for example by laser welding together, several sheets or cut-out blanks of steel, known as sub-blanks, in order to optimize the performance of the part in its different areas, to reduce overall part weight and to reduce overall part cost.

The ultimate tensile strength, the yield strength, the elongation and the uniform elongation are measured according to ISO standard ISO 6892-1, published in October 2009. The tensile test specimens are cut-out from flat areas. If necessary, small size tensile test samples are taken to accommodate for the total available flat area on the part.

Hardness is a measure of the resistance to localized plastic deformation induced by mechanical indentation. It is well correlated to the mechanical properties of a material and is a useful local measurement method which does not require to cut out a sample for tensile testing. In the current invention, the hardness measurements are made using a Vickers indenter according to standard ISO 6507-1. The Vickers hardness is expressed using the unit Hv.

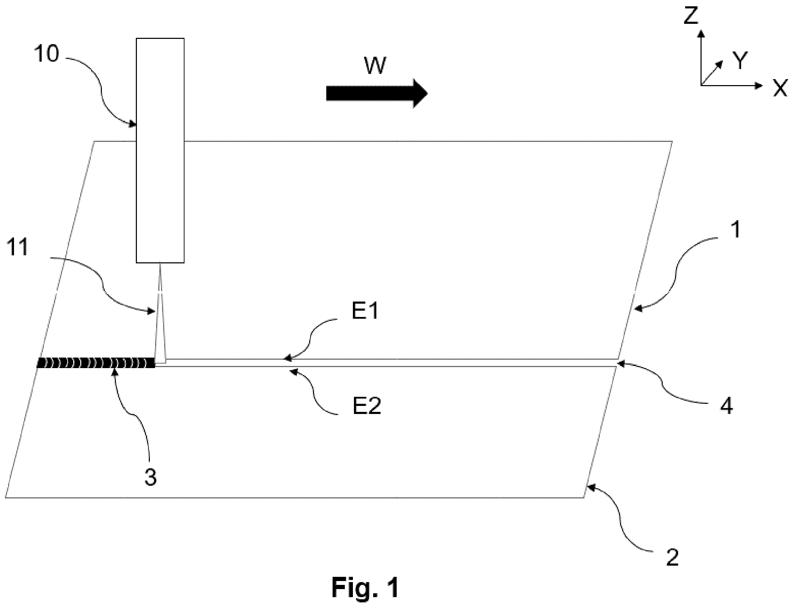

Referring to figure 1, butt to butt welding, or simply butt welding, is a specific type of welding operation in which the two steel sheets to be welded 1, 2, are placed side by side along their respective edges E1, E2 and the weld seam 3 is created by melting the respective edges E1, E2 to form a melt pool containing a mixture of both steel sheets and possibly an additional material used to support the welding process. The melt pool then solidifies to form a weld seam 3. Figure 1 represents the case of a laser butt to butt welding in which a laser beam 10, emitting a laser beam 11 is used as the energy source to create the melt pool. The weld edges can be either rectilinear or curvilinear. The steel sheets to be welded and the energy source used to melt the steel sheets move relative to one another during the welding operation according to a direction W at a speed known as the welding speed. In a specific embodiment, a gap 4 can be left between the steel sheets 1, 2. This allows for example to incorporate a significant amount of additional material, such as filler wire, in the melt pool, without creating an over-thickness of the weld seam. Such an over-thickness is considered as a geometric defect and would be detrimental to further processing of the welded blank, for example it would be detrimental to the stamping operation.

Laser welding designates a welding operation in which at least a laser source is used to provide the necessary energy to melt the steel sheets. In particular embodiments, other energy sources such as electric arcs, infrared heating etc can be associated to the laser source to provide the welding energy.

Laser welding generates heat in the steel sheets to be welded 1, 2 in the vicinities of their edges E1, E2. The area of the steel sheets 1, 2 in which the heat generated by the welding process induces a temperature increase is known as the heat affected zone. Isotherms of a given temperature in the heat affected zone designate the points of the steel sheets in which the maximum temperature reached is said given temperature. For example, the 400°C isotherm of the heat affected zone of sheet 1 designates all points of steel sheet 1 close to the edge E1 at which the maximum temperature reached during the welding operation was 400°C. Logically, any point closer to the edge E1 than the 400°C isotherm will have reached a temperature higher than 400°C during welding and conversely, any point further away from E1 will have reached a maximum temperature lower than 400°C during welding.

The quality of the weld seam in terms of geometric defect is defined by the European standard EN 10359:2015 entitled "Laser welded tailored blanks - Technical delivery conditions".

The current invention relates to the welding of steel sheets of which at least one has a zinc coating on at least one side. By zinc coating, it is meant a coating having a chemical composition comprising at least 80% in weight% of Zinc. For example, zinc coatings include the following type of known coatings (the list is not limitative):
- pure zinc coating applied by electrodeposition
- pure zinc coating applied by hot-dip galvanizing
- zinc / iron coating applied by hot-dip galvanizing directly followed by an alloying step between the steel sheet and the zinc coating to increase the iron content of the coating up to values around 8 - 12% in weight% of Fe.
- zinc, aluminum, magnesium alloy coatings containing, in weight %, 1% to 6% of aluminum, 0.5% to 5% magnesium, the balance being Zn.

In the following description and claims, the zinc coating is characterized by its thickness. The thickness of the zinc coating can be measured using standardized methods such as the one described in ISO standard 1463, "Metallic and oxide coatings - Measurement of coating thickness - Microscopical method". In order to clearly differentiate the metallic coating from the substrate, it is possible to use Nital etching, as described in point 1 of annex C of the previously mentioned standard.

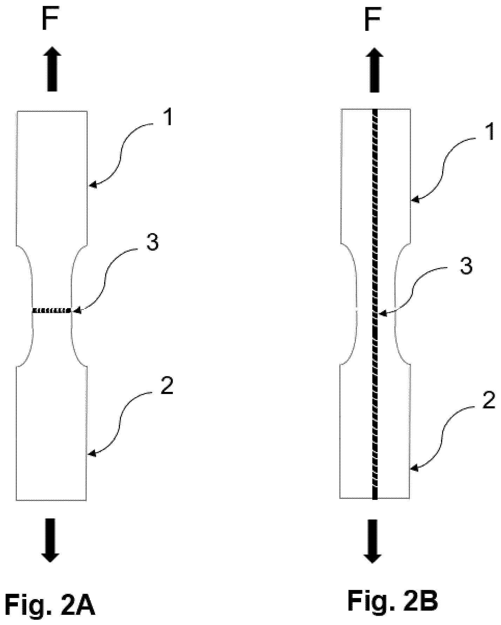

Figure 2A represents the state of the art of how the strength of a weld seam is currently evaluated. A tensile test sample is prepared in which the weld seam 3 joining the two steel sheets 1 and 2 is placed in the middle of the sample in the transverse direction compared to the tensile strength F. This well-established method gives a good evaluation of the relative strength of the different elements composing the samples, i.e. the two steel sheets 1, 2 and the weld seam 3. According to this method, a weld seam is considered sufficiently strong if the sample breaks outside of the weld seam. In other words, the weld seam is considered of good quality if it is at least harder than the weakest of the two steel sheets, which means that the weld is not the weak link in the assembly.

While the above described method gives a good evaluation of the pure mechanical strength of a weld seam, it does not in fact reflect the reality of the different deformation modes that a weld seam will undergo in real life conditions. When a laser welded blank is stamped, the weld seam undergoes deformations in all direction and not only in the transverse direction.

The inventors have found that when laser welding steel sheets, at least one of them having a high strength, for example a tensile strength above 590MPa, small cracks can be initiated perpendicular to the weld seam in areas in which the weld is submitted to deformations having a longitudinal component. Surprisingly, this type of crack is only observed for high strength steels and not for lower grades. The risk that this type of crack occurs cannot be evaluated using the above described method, because the behavior of the weld when deformed in the longitudinal direction is not at all tested in the traditional testing method. Furthermore, there is a statistical element associated with this type of cracking. For the same part geometry involving the same steel grades and the same laser welding parameters, some parts can be free of cracks while small cracks occur on other parts. This is due to the naturally occurring variations in steel sheet composition, welding process, stamping process etc. These small cracks are therefore not fully predictable, which is a further problem in an industrial setting, because they will be difficultly detected through quality control. Even though these cracks can be of small scale on the formed part, they represent a fatal weakness of the part and will lead to part failure during the life of the part, possibly causing serious safety issues.

The inventors have therefore developed a new methodology to evaluate the risk of these small cracks to occur. The inventors have found that when placing the weld seam in the longitudinal direction of the tensile sample, parallel to the tensile strength, as indicated on figure 2B, it is possible to witness the occurrence of small transverse cracks on laser welded assemblies involving at least one blank of high strength steel. Furthermore, the inventors have found that a good criterion to make sure that small cracks are not likely to occur in serial production is to perform a series of 20 tensile tests on longitudinally welded samples and to compare the uniform elongation of the welded assembly with the weighted average of the uniform elongation of each of the steel sheets. The inventors have found that the risk of crack occurrence is very low if the uniform elongation of the welded assembly Uweld is at least 50% that of the weighted average (Usheet1*th1 + Usheet2*th2)/(th1 +th2) on all the 20 tensile tests performed, wherein th1 and th2 are the thicknesses of the steel sheets 1, 2 which are assembled and Usheet1, Usheet2, their respective uniform elongations.

In the rest of the description, when Uweld is lower than (Usheet1*th1+ Usheet2*th2)/(th1+th2), the test sample will be said to show a brittle failure - on the other hand if Uweld is higher than said weighted average, the test sample will be said to show a ductile failure.

Thanks to the above described newly developed statistical longitudinal testing of weld seams, the inventors were able to investigate the small crack issue on a large number of zinc coated steel sheets.

The inventors were able to establish that the risk of small cracks occurring on a welded assembly including at least one zinc coated steel sheet was present when the C content of said steel sheet, in weight%, is above 0.15% and / or when the Si content is above 0.5%. The current invention applies to laser welding of zinc coated steel sheets of which at least one of the steel sheets has a chemical composition comprising at least 0.15wt% of C or 0.5wt% of Si, or both. For simplicity sake, we will consider that at least steel sheet 1 has such a chemical composition in the rest of the description.

The small cracks appear in the vicinity of the weld seam, in the heat affected zone, or in the weld seam itself. This points out to a problem of LME related to the combination of the specific metallurgies and microstructures of high strength steels associated with the presence of zinc, which becomes liquid under the influence of the heat of the welding operation. In fact, the occurrence of LME in laser butt welding is surprising because LME is known to result from the combination of three factors, one of which is not meant to occur in the case of laser butt welding:
- steel sheet metallurgy containing high amount of Si and/or C - which is indeed the case in the high strength steels described previously,
- presence of liquid metal, in particular liquid zinc - this can indeed be the case when the zinc melts, above 420°C, under the influence of the heat generated by the laser beam,
- presence of residual stress - this on the other hand does not seem to be the case when laser butt welding, because this technology does not involve any mechanical pressure to generate the weld, contrary to spot welding for example in which a specific weld force is applied.

It was therefore surprising to the inventors to see LME type cracks occurring on laser welded assemblies of zinc coated high strength steels. It is possible that the residual stress necessary to induce LME comes from the thermal strain and strain induced by phase transformation of the blanks following the welding operation.

Knowing that LME can indeed occur when laser welding zinc coated high strength steels, the inventors sought to apply the newly developed statistical longitudinal testing of weld seams to support the development of countermeasures against LME occurrence.

The inventors went about to remove the zinc coating in the vicinity of the weld seam in order to suppress LME induced cracking. Several possible methods can be applied to remove the zinc coating. It is possible to mechanically brush the surface of the sheets in order to brush off the zinc coating. It is also possible to use a pulsed laser beam to ablate the zinc coating. The inventors found that surprisingly it was not necessary to fully remove the zinc coating in the vicinity of the weld seam in order to fully suppress the occurrence of LME induced cracks. In fact, the authors found that once the zinc coating thickness is equal to or below 3.5 microns, there was no more risk of LME.

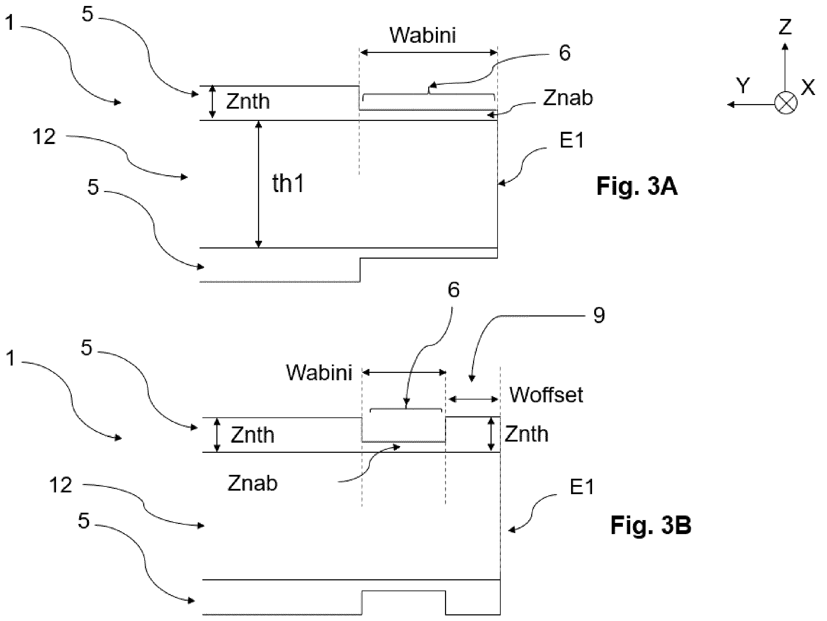

Referring to figure 3A (not covered by the present invention), the steel sheet 1 consists of a substrate 12 topped with a zinc coating 5, having a Zn coating thickness Znth, expressed in microns. Note that in the figure, for simplicity sake, reference is made only to the coating on the top face of steel sheet 1. The same applies to all the other faces of the steel sheets 1 and 2, i.e. the bottom face of sheet 1 and the top and bottom faces of sheet 2. In fact what is important is to apply and implement the current invention by removing at least part of the zinc coating on all faces where the zinc coating thickness is higher than 3.5 microns and the substrate 12 of the steel sheet has a chemical composition in weight%, with a Carbon content above 0.15% or a Silicon content above 0.5% or both.

The zinc coating 5 is at least partially removed over a width Wabini (the initial ablation width), thus creating an ablated area 6. The coating thickness in the ablated area 6 is Znab (thickness of the coating in the ablated area). It should be noted that the coating thickness in the ablated area refers to the maximum thickness in the ablated area. If the ablation process leaves an uneven coating thickness in the ablated area 6, Znab corresponds to the average amount of Zn in the ablated area, as measured through a microscopic investigation of the cross section.

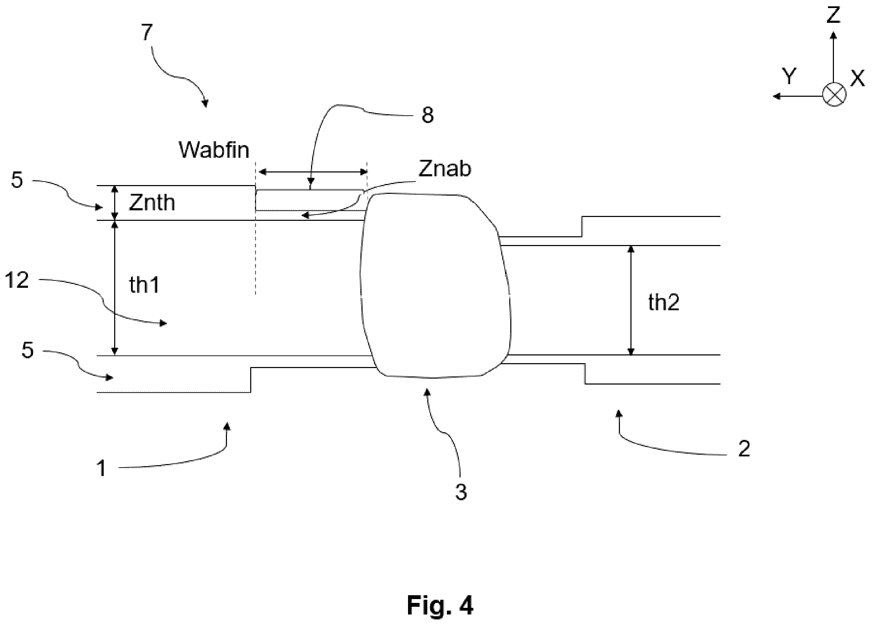

According to the present invention, as illustrated on figure 3B, at least one of said ablated area 6 on the steel sheet before welding does not start right at the edge E1 of the steel sheet. Instead, there is an offset area 9, having a width Woffset, over which no ablation is performed. In other words, the coating thickness in the offset area 9 is the same as in the bulk of the material, Znth. The inventors have found that the presence of such an offset does not lead to LME cracking, as long as the entire offset area 9 is melted and incorporated in the weld seam 3 and as long as Wabfin remains equal to or above 0.5mm. It was found that there is no LME in the weld seam itself, even if some zinc from the metallic coating is incorporated into the weld seam. When an offset is present before welding and the entire offset region 9 is incorporated in the weld pool, the ablated region after welding 8 will have the same characteristics as if there was no offset, as depicted on figure 4. Advantageously, the presence of such an offset can ensure better corrosion protection of the edge E1 before welding. Indeed, thanks to the sacrificial nature of zinc corrosion protection, the zinc coating in the offset area 9 is available to protect the uncoated exposed parts of the edge E1.

As was previously explained, the inventors have found that in order to guarantee the absence of LME, it is necessary to control the ablation thickness Znab below 3.5 microns.

We now refer to figure 4, which is a cross section of the laser welded blank 7 consisting of the steel sheets 1 and 2 as well as the weld seam 3.

The ablated area after welding 8 has a smaller width Wabfin (final ablation width) than the width Wabini of the ablated area before welding 6. Indeed, part of the edge E1 of steel sheet 1 has been incorporated by melting into the weld seam 3 and as a consequence part of the ablated area before welding 6 has also been incorporated in the weld seam 3.

Given the fact that the melting point of zinc is 420°C and that LME can only occur in the presence of liquid Zn, LME is a potential issue on the laser welded blank 7 over the heat affected zone in areas which reached a surface temperature higher than 420°C. The inventors have found that when applying laser welding, the location of the 420°C isotherm at the surface of the steel sheets is always within a distance from the weld seam 3 of 0.2 to 0.5 mm. To prevent LME occurrence, it is therefore necessary that Wabfin is equal to or above 0.5 mm.

In conclusion, in order to prevent LME, it is necessary to reduce the Zn coating thickness in the vicinity of the edge to a thickness Znab below 3.5 microns over a width Wabini such that the width of the ablated area after welding Wabfin is equal to or higher than 0.5mm. Knowing the amount of material which is melted from the edge E1, the skilled person will be able to determine the necessary ablation width Wabini on the steel sheet 1 before welding.

It will thus be possible to obtain a laser welded blank free of LME in the vicinity of the weld seam 3, comprising the first and a second steel sheet 1 and 2, each comprising a substrate 12 and at least one of them having a zinc based metallic coating 5 on at least one side, wherein all the faces having a zinc based metallic coating thickness Znth above 3.5 microns and a steel sheet substrate 12 with a Carbon content above 0.15% or a Silicon content above 0.5% or both, comprise an ablation area after welding 8 having a Zinc-based metallic coating thickness after ablation Znab which is equal to or lower than 3.5 microns and a width of the ablated area after welding Wabfin equal to or greater than 0.5mm.

It will also be possible to manufacture parts by forming the above described laser welded blank and without risk of LME cracks in the vicinity of the weld. For example, the laser welded blank can be manufactured into a part by cold stamping or by hot forming.

In a particular embodiment, the zinc coating ablation is performed using abrasive brushes rotating on the steel sheet to remove at least part of the coating. For example, the brushes are made of a polymer web encapsulating hard ceramic particles such as for example aluminum oxides or silicon carbides. In this case, the critical parameters for brushing will be the abrasive power of the brush, the force exerted on the coating by the brush and the speed at which the brush travels at the surface. According to the material and zinc coating used, it will be necessary to adjust said parameters in order to obtain the desired ablated thickness Znab. It is also possible to perform several brushing passes in order to remove more of the coating.

In a particular embodiment, ablation is performed using a pulsed laser beam. The inventors have found that the interaction between the short laser pulses and the coating causes at least part of the coating to be evaporated and expulsed from the surface of the steel sheet. For example, a laser power of 400W to 1500W can be used with a pulse frequency of 5 to 15kHz and a ablation speed between 2 and 15 m/min.

In a particular embodiment, a decarburisation step is applied to at least one of the steel sheets 1, 2, in order to lower the carbon content of said steel sheet close to the surface of said steel sheet. This decarburisation step is performed before applying the zinc coating. For example, the decarburisation step is performed in the furnace used to anneal the steel sheet before coating it. For example, the decarburisation step is performed by controlling the dew point in said annealing furnace to a value equal to or greater than -10°C. Advantageously, by using a steel sheet which has a lower carbon content close to the surface, the risk of LME is reduced. For example, the carbon content at a depth of 20 microns from the surface of the steel sheet on each side is below 0.15wt%, preferably below 0.10wt%, and the carbon content of the steel sheet at the center of said steel sheet (for example the carbon content measured in a strip of +/- 100 microns from the mid-thickness of the steel sheet) is above 0.15wt%.

In a particular embodiment, the ablation step is performed in such a way that the remaining zinc thickness Znab is above 0.5 microns, more preferably above 1.0 micron. As previously explained, the inventors have found that there is no risk of LME, even if there is a small amount of zinc remaining in the ablated area 6, as long as Znab is below 3.5 microns. Advantageously, by leaving some zinc in the ablated area 6, it is possible to ensure some amount of corrosion protection of the ablated steel sheet before welding. Thanks to the sacrificial nature of the zinc coating, this corrosion protection extends to the uncoated bare areas of the edges, on the sides of the steel sheets. Furthermore, applying an ablation process which leaves some zinc coating in the ablated area 6 means that there is no risk of removing (by brushing) or melting (by laser ablation) the underlying substrate 12 of the steel sheet below the ablated area 6. This is interesting because ablating the substrate 12 itself below the coating would weaken the laser welded blank by creating local geometric imperfections and a local under-thickness.

In a particular embodiment, the laser welding process is performed less than 1 minute after the ablation process has been performed, preferably even less than 30 seconds. For example, the ablation process and the welding process are performed on the same device, which comprises an equipment for the ablation step and for the welding step. For example, the ablation process and welding process are performed under the same clamping operation, meaning that the steel sheets 1, 2 are clamped to be held in place for the ablation step and the same clamping is held in place for the welding process. Advantageously, by ablating and welding in a rapid sequence, possibly even under the same clamping operation, it will be possible to increase productivity, reduce the amount of material handling steps and also to reduce risks of corrosion occurring due to the ablation step.

In a particular embodiment, the ablation process is not performed directly on the edge of the steel sheet, but in the middle of the steel sheet - said steel sheet being subsequently cut in the area in which the ablation process was performed so that the ablated area is located on the edge of the cut sample (possibly with an offset).

In a particular embodiment, the characteristics of at least one of the steel sheets to be welded in terms of chemical composition, microstructure and mechanical properties corresponds to one of the line of the following table (the chemical composition is expressed in weight % and the balance is Fe and unavoidable impurities coming from the elaboration process, the %residual austenite in the microstructure of the steel sheet is expressed in surface% of a cross section, YP stands for the Yield Point expressed in MPa, UTS stands for the Ultimate Tensile Strength expressed in MPa, EI% is the elongation as measured according to the above mentioned ISO 6892 standard):

| %C | %Mn | %Si | %Al | %Cr | %Nb | YP | UTS | El% |
|---|---|---|---|---|---|---|---|---|
| 0.11-0.15 | 1.1-1.8 | 0.5-0.9 | <0.05 | | | 330-440 | 590-700 | ≥26% |
| 0.13-0.18 | 1.1-1.8 | 0.5-0.9 | 0.6-1 | | | 330-440 | 590-700 | ≥26% |
| 0.13-0.18 | 1.1-1.8 | 0.5-0.9 | 0.6-1 | | | 440-550 | 780-900 | ≥18% |
| 0.15-0.25 | 2-2.8 | 0-0.4 | 0.2-1.2 | 001-0.5 | | 700-850 | 980-1130 | ≥13% |
| 0.1-0,5 | 1-3.4 | 0.5-2.5 | 0.03-1.5 | 0.05-1 | | 600-750 | 980-1130 | ≥19% |
| 0.15-0.23 | 1.4-2.6 | 0.6-1.5 | 0.02-1 | <0.3 | <0.035 | 600-750 | 980-1130 | ≥19% |
| 0.18-0.25 | 1.5-2.5 | 0.9-1.8 | 0.02-1 | 0.1-0.4 | 0.01-0.035 | 600-750 | 980-1130 | ≥19% |
| 0.15-0.25 | 1.8-3 | 1.2-2 | <0.1 | <0.5 | | 700-820 | 1050-1180 | ≥14% |
| 0.19-0.24 | 1.5-2.5 | 1.2-2 | 0.01-0.06 | 0.2-0.5 | | 850-1080 | 1180-1330 | ≥13% |
| 0.13-0.22 | 2.4-3 | 1.2-2.3 | 0.02-1 | | <0.05 | 850-1080 | 1180-1330 | ≥13% |
| 0.13-0.22 | 2.4-3 | 1.2-2.3 | 0.02-1 | | <0.05 | 850-1080 | 1180-1330 | ≥13% |

The invention will now be illustrated by the following inventive example I2, all the other examples illustrated/detailed below not being covered by the present invention.

Table 1 gives the chemical composition of the steel sheet used.

**Table 1: steel sheet composition expressed in weight%**

| **%C** | **%Mn** | **%P** | **%S** | **%Si** | **%Cu** | **%Ni** | **%Cr** | **%Al** | **%Mo** | **%V** | **%Nb** | **%B** | **%Ti** |
|---|---|---|---|---|---|---|---|---|---|---|---|---|---|
| 0.22 | 1.96 | 0.0045 | 0.0013 | 1.12 | 0.01 | 0.01 | 0.19 | 0.56 | 0.004 | 0.004 | 0.032 | 0.0004 | 0.007 |

The Si content is above 0.5% and the carbon content is above 0.15%, meaning that the steel sheet is critical in terms of LME risk when welding with a zinc coating. The steel sheet was decarburized before applying a hot-dip pure zinc coating so that the carbon content measured at 20 microns from the steel sheet surface using glow discharge optical emission optical spectrometry (GDOES) is 0.05wt%.

The initial coating thickness of the steel sheet is from 7 to 11 microns, depending on the sample (in fact there can be a variation of the coating thickness when using industrially produced steel sheets because of the naturally occurring process variations on the production lines).

The steel sheets have a thickness of 1.0mm. Homogeneous assemblies of the same steel sheet and thickness are produced for the current trials (in other words, the characteristics of steel sheet 1 and steel sheet 2 are the same).

Table 2 lists the ablation process parameters that were used.

**Table 2: ablation process parameters**

| Ref | Zn removal method | laser power (W) | pulse frequency (KHz) | laser speed (m/min) | brushing force (N) | brushing speed (m/min) | brushing passes |
|---|---|---|---|---|---|---|---|
| R1 | no ablation | - | - | | - | | - |
| R2 | laser | 200 | 12 | 10 | | | |
| R3 | laser | 350 | 12 | 10 | | | |
| R4 | laser | 500 | 12 | 10 | | | |
| I1 | laser | 490 | 10 | 2 | | | |
| I2 | laser | 490 | 10 | 2 | | | |
| I3 | laser | 900 | 12 | 8 | | | |
| I4 | mechanical | - | - | | 30 | 2.5 | 3 |
| I5 | mechanical | - | - | | 20 | 2.5 | 1 |
| I6 | mechanical | - | - | | 20 | 5 | 1 |
| I7 | mechanical | - | - | | 30 | 2.5 | 1 |
| I8 | mechanical | - | - | | 10 | 2.5 | 1 |
| I9 | mechanical | - | - | | 10 | 5 | 1 |

The sample references start by I, wherein I2 is falling under the present invention, in the case of samples produced according to the current invention and by R, for reference, in case of counterexamples, outside of the current invention. Zn coating ablation was performed either using a low power pulsed laser or using mechanical brushing.

Mechanical brushing was performed using robot mounted 3M scotch-brite "Deburr and Finish pro 4C MED+" brushes, a diameter of 76.2mm, a width of 12.7mm and rotating at 6000rpm. The brushing speed corresponds to the speed at which the robotic arm travels along the sheet to be brushed.

Table 3 presents the results of the ablated area before welding 6 and after welding 8, as well as the result of mechanical testing of the welds.

**Table 3: ablated regions characteristics and weld properties**

| Ref | Znab (microns) | Wabini (mm) | Woffset (mm) | Wabfin (mm) | LME occurrence? | %brittle failure out of 20 longitudinal test samples |
|---|---|---|---|---|---|---|
| R1 | 9.7 | 0 | 0 | 0 | yes | 40% |
| R2 | 7.6 | 1.2 | 0 | 0.7 | yes | 5% |
| R3 | 9.1 | 1.2 | 0 | 0.7 | yes | 10% |
| R4 | 8.3 | 1.2 | 0 | 0.7 | yes | 5% |
| I1 | 0.1 | 1.3 | 0 | 0.8 | no | 0% |
| I2 | 0.1 | 0.9 | 0.3 | 0.6 | no | 0% |
| I3 | 0.1 | 1.2 | 0 | 0.7 | no | 0% |
| I4 | 0.1 | 6.4 | 0 | 5.8 | no | 0% |
| I5 | 0.2 | 6.4 | 0 | 5.8 | no | 0% |
| I6 | 0.5 | 6.4 | 0 | 5.8 | no | 0% |
| I7 | 0.5 | 6.4 | 0 | 5.8 | no | 0% |
| I8 | 0.6 | 6.4 | 0 | 5.8 | no | 0% |
| I9 | 3.2 | 6.4 | 0 | 5.8 | no | 0% |

The underlined values correspond to the characteristics which are outside of the invention in the case of the reference samples.

Sample R1 is not ablated and serves as the initial reference, representing the very poor mechanical performance of a welded assembly in which no countermeasure is taken to prevent LME. 40% of the longitudinally tested samples according to the above described innovative testing method failed due to LME cracks.

Samples R2 to R4 are cases in which ablation was performed but the remaining zinc thickness after ablation Znab is too high in order to prevent the occurrence of LME.

Samples I1 and I3 to I9, illustrate that by removing the zinc coating to below 3.5 microns on a width which is equal to or higher than 0.5mm after welding, LME is prevented and structurally sound assemblies are produced.

In the case of I2 (falling under the scope of the present invention), ablation was performed leaving an offset area of 0.3mm at the edge of the steel sheets. Despite the presence of this non ablated area at the edge of the steel sheets, the final assembly is free of LME because the entire offset area is absorbed in the weld seam and the ablated width after welding is higher than 0.5mm.

In the case of samples I9, the remaining coating thickness after ablation Znab is 3.2 microns. No ablation is observed on the resulting assembly, despite the presence of the remaining zinc coating thickness.

As a conclusion, when the steel sheets are ablated before welding to produce an ablated area as defined in the appended claims, with a remaining thickness Znab equal to or lower than 3.5 microns over width which is higher than 0.5mm on the final weld assembly, LME does not occur.

## Claims

1. Method for butt-welding two steel sheets (1, 2), the method being **characterised in that**:
each steel sheet comprises a substrate (12) and at least one said steel sheet (1, 2) has a zinc based metallic coating (5) on at least one side with a thickness Znth, and has further a chemical composition of the substrate (12) expressed in weight% with a Carbon content above 0.15% or a Silicon content above 0.5% or both,
and **in that**:
the method comprises the steps of:
- Providing said two steel sheets (1, 2),
- On all the faces having a zinc based metallic coating thickness Znth above 3.5 microns and a steel sheet substrate (12) with a Carbon content above 0.15% or a Silicon content above 0.5% or both: removing at least part of said metallic coating to form an ablation area before welding (6) having a Zinc-based metallic coating thickness after ablation Znab which is equal to or lower than 3.5 microns and in such a way that the width Wabfin of the ablation area after welding (8) is equal to or greater than 0.5mm,
- leaving in at least one said ablation area before welding (6) an offset area (9) between said ablation area before welding (6) and the edge of the steel sheet, wherein said ablation area before welding (6) has a zinc based metallic coating thickness Znab equal to or lower than 3.5 microns and wherein said offset area (9) has a zinc based metallic coating thickness equal to the zinc based metallic coating thickness before ablation Znth higher than 3.5 microns,
- butt welding said steel sheets (1, 2) using at least a laser source.

2. Method of claim 1 wherein the metallic coating removal step is performed using a pulsed laser beam.

3. Method of claim 1 wherein the metallic coating removal step is performed using mechanical brushing.

4. Method according to any one of claims 1 to 3 wherein in at least one ablation area (6) the Zinc based metallic coating thickness after ablation Znab is equal to or higher than 0.5 microns.

5. Method according to any one of claims 1 to 4 wherein at least one of said steel sheets (1, 2) has undergone a decarburization treatment before application of the zinc based metallic coating such that the surface carbon content at 20 microns depth is less than 0.15 weight%.

## Patentansprüche

1. Verfahren zum Stumpfschweißen von zwei Stahlblechen (1, 2), wobei das Verfahren **dadurch gekennzeichnet ist, dass**:
jedes Stahlblech ein Substrat (12) umfasst und mindestens eines der Stahlbleche (1, 2) auf mindestens einer Seite eine metallische Beschichtung (5) auf Zinkbasis mit einer Schichtdicke Znth aufweist und ferner eine chemische Zusammensetzung des Substrats (12), ausgedrückt in Gewichtsprozent, mit einem Kohlenstoffgehalt über 0,15 % oder einem Siliziumgehalt über 0,5 % oder beidem aufweist,
und dass:
das Verfahren die folgenden Schritte umfasst:
- Bereitstellen der zwei Stahlbleche (1, 2),
- Auf allen Flächen, die eine Schichtdicke der metallischen Beschichtung auf Zinkbasis Znth über 3,5 Mikrometer und ein Stahlblechsubstrat (12) mit einem Kohlenstoffgehalt über 0,15 % oder einem Siliziumgehalt über 0,5 % oder beidem aufweisen: Entfernen mindestens eines Teils der metallischen Beschichtung, um einen Ablationsbereich vor dem Schweißen (6) zu bilden, der eine Schichtdicke der metallischen Beschichtung auf Zinkbasis nach Ablation Znab aufweist, die gleich oder kleiner als 3,5 Mikrometer ist, und auf eine Weise, dass die Breite Wabfin des Ablationsbereichs nach Schweißen (8) gleich oder größer als 0,5 mm ist,
- Belassen eines Versatzbereichs (9) in mindestens einem der Ablationsbereiche vor Schweißen (6) zwischen dem Ablationsbereich vor Schweißen (6) und dem Rand des Stahlblechs, wobei der Ablationsbereich vor Schweißen (6) eine metallische Schichtdicke auf Zinkbasis Znab gleich oder kleiner als 3,5 Mikrometer aufweist und wobei der Versatzbereich (9) eine metallische Schichtdicke auf Zinkbasis gleich die metallische Schichtdicke auf Zinkbasis vor Ablation Znth größer als 3,5 Mikrometer aufweist,
- Stumpfschweißen der Stahlbleche (1, 2) unter Verwendung mindestens einer Laserquelle.

2. Verfahren nach Anspruch 1, wobei der Schritt eines Entfernens der Metallbeschichtung unter Verwendung eines gepulsten Laserstrahls durchgeführt wird.

3. Verfahren nach Anspruch 1, wobei der Schritt eines Entfernens der Metallbeschichtung unter Verwendung von mechanischem Bürsten erfolgt.

4. Verfahren nach einem der Ansprüche 1 bis 3, wobei in mindestens einem Ablationsbereich (6) die Schichtdicke der Metallbeschichtung auf Zinkbasis nach Ablation Znab gleich oder größer als 0,5 Mikrometer ist.

5. Verfahren nach einem der Ansprüche 1 bis 4, wobei mindestens eines der Stahlbleche (1, 2) vor Aufbringen der metallischen Beschichtung auf Zinkbasis einer Entkohlungsbehandlung unterzogen wurde, sodass der Oberflächenkohlenstoffgehalt in 20 Mikrometer Tiefe weniger als 0,15 Gewichts-% beträgt.

## Revendications

1. Procédé de soudage bout à bout de deux tôles d'acier (1, 2), le procédé étant **caractérisé en ce que** :
chaque tôle d'acier comprend un substrat (12) et au moins une desdites tôles d'acier (1, 2) comporte un revêtement métallique à base de zinc (5) sur au moins une face avec une épaisseur Znth, et a en outre une composition chimique du substrat (12) exprimée en % en poids avec une teneur en carbone supérieure à 0,15 % ou une teneur en silicium supérieure à 0,5 % ou les deux,
et **en ce que** :
le procédé comprend les étapes consistant à :
- Fournir lesdites deux tôles d'acier (1, 2),
- Sur toutes les faces ayant une épaisseur de revêtement métallique à base de zinc Znth supérieure à 3,5 microns et un substrat en tôle d'acier (12) avec une teneur en carbone supérieure à 0,15 % ou une teneur en silicium supérieure à 0,5 % ou les deux : éliminer au moins une partie dudit revêtement métallique pour former une zone d'ablation avant soudage (6) ayant une épaisseur de revêtement métallique à base de zinc après ablation Znab qui est égale ou inférieure à 3,5 microns et de sorte que la largeur Wabfin de la zone d'ablation après soudage (8) soit égale ou supérieure à 0,5 mm,
- laisser, dans au moins une desdites zones d'ablation avant le soudage (6), une zone de décalage (9) entre ladite zone d'ablation avant le soudage (6) et le bord de la tôle d'acier, dans lequel ladite zone d'ablation avant le soudage (6) a une épaisseur de revêtement métallique à base de zinc Znab égale ou inférieure à 3,5 microns et dans lequel ladite zone de décalage (9) a une épaisseur de revêtement métallique à base de zinc égale à l'épaisseur de revêtement métallique à base de zinc avant l'ablation Znth supérieure à 3,5 microns,
- souder bout à bout lesdites tôles d'acier (1,2) à l'aide d'au moins une source laser.

2. Procédé selon la revendication 1 dans lequel l'étape d'élimination du revêtement métallique est réalisée à l'aide d'un faisceau laser pulsé.

3. Procédé selon la revendication 1 dans lequel l'étape d'élimination du revêtement métallique est réalisée par brossage mécanique.

4. Procédé selon l'une quelconque des revendications 1 à 3, dans lequel, dans au moins une zone d'ablation (6), l'épaisseur du revêtement métallique à base de zinc après ablation Znab est égale ou supérieure à 0,5 micron.

5. Procédé selon l'une quelconque des revendications 1 à 4 dans lequel au moins l'une desdites tôles d'acier (1, 2) a subi un traitement de décarburation avant l'application du revêtement métallique à base de zinc de sorte que la teneur en carbone de la surface à une profondeur de 20 microns est inférieure à 0,15 % en poids.
